# EUROPEAN PATENT APPLICATION

(11) **EP 2 775 262 A1**
(43) Date of publication of application: **10.09.2014**
(21) Application number: 13157860.1
(22) Date of filing: 05.03.2013
(51) Int. Cl.: G01C 21/36

(54) **Route guidance**

(71) Applicant: Harman Becker Automotive Systems GmbH, 76307 Karlsbad (DE)
(72) Inventor: Strassenburg-Kleciak, Marek, 85748 Garching bei München (DE); Mitrakis, Stavros, 85551 Kirchheim (DE)
(74) Representative: Bertsch, Florian Oliver

(57) **Abstract**

Various embodiments relate to techniques of providing route guidance (201 a, 201 d) for a planned route comprising a route guidance event (210) ahead of a current position (203) of a vehicle. The route guidance (201a, 201d) is provided for at least one position (220-1, 220-2) to a driver of the vehicle to enable the driver to follow the route guidance event (210). The route guidance (201a, 201d) is provided in dependence of an established distance (220-1a, 220-2a) between the at least one position (220-1, 220-2) and the route guidance event (210) and in dependence of a number of required driving lane changes (202a) from the at least one position (220-1, 220-2) to the route guidance event (210).

## Description

### Technical field

The invention relates to a method of providing route guidance for a planned route and to a navigation system for a vehicle. In particular, various embodiments relate to techniques which provide the route guidance in a situation where a route segment along a planned route has a plurality of driving lanes.

### Background

Navigation techniques are known which provide route guidance along a planned route. The route guidance typically includes graphical indications of the planned route in a map view and/or audio commands to a driver of the vehicle and/or visual indications such as turning arrows, e.g., in a head-up display or a center console display, etc. The route guidance aims at making the driver aware of upcoming route guidance events, including but not limited to: turning events, intersections, relevant points of interest, changes of speed, etc. Typically, at a route guidance event, a certain action of the driver of the vehicle is required in order to follow the planned route.

In various scenarios, the route guidance may require a large amount of attention by the driver. This may in particular be the case when the planned route is in densely populated areas and/or where the route guidance is comparably detailed such that a large amount of related information is presented to the driver of the vehicle. On the one hand, this may allow for precise and comprehensive route guidance enabling the driver of the vehicle to navigate even in complex situations without unintentionally leaving the planned route. On the other hand, if the route guidance is provided comparably often and / or in a comparably detailed manner and / or with frequent occurrences, this may burden the driver with a large amount of information to be handled; the driver may tend to be over-burdened and over-look certain route guidance.

Where detailed route guidance is desired, the route guidance is often pre-emptively provided for an upcoming route guidance event; i.e., is provided at a certain distance ahead and/or a certain time ahead of the route guidance event. Then a driver may be tempted to either overestimate or underestimate the pertinence of the particular route guidance. In other words, it may be difficult for the driver of the vehicle to differentiate between such route guidance which requires immediate action by the driver and other route guidance which only pre-emptively aims at creating a certain level of awareness of the upcoming route guidance events by the driver; but, at the same time, does not immediately require any action.

From a perspective of system design, this may create a trade-off situation between comparably detailed route guidance creating the risk of overwhelming the driver with information, on the one hand - and, on the other hand, route guidance at a comparably lower level of detail which does not burden the driver with a large degree of information, but may lead to an increased risk of the driver not successfully following a route guidance event.

Therefore, a need exists to provide advanced techniques for route guidance for a planned route. In particular, a need exists to provide route guidance at a comparably high level of detail together with an indication of a pertinence of the route guidance. Furthermore, a need exists to provide the route guidance situation-specific, i.e., adaptive with respect to a driving situation of the vehicle for which the route guidance is provided.

### Summary

This need is met by the features of the independent claims. The dependent claims define embodiments.

According to an aspect, a method of providing route guidance for a planned route comprising a route guidance event ahead of a current position of a vehicle is provided. The method comprises, for at least one position which is located on a road segment along the planned route which has a plurality of driving lanes and is situated in-between the current position and the route guidance event: establishing a distance between the at least one position and the route guidance event and establishing a number of required driving lane changes from the at least one position to the route guidance event in order to follow the route guidance event. The method further comprises, in dependence of said establishing of the distance and in dependence of said establishing of the number of required driving lane changes, providing the route guidance for the at least one position to a driver of the vehicle to enable the driver to follow the route guidance event.

For example, the route guidance event can relate to a turning event requiring an action by the driver of the vehicle in order to follow the planned route. For example, the turning event can relate to an intersection crossing, an exit of a current road, a U-turn, final approach to a destination or of a point of interest, etc. The route guidance may be provided using one or more of the following techniques: issuing a visual and / or audible and / or haptic instruction to the driver (route guidance command), a graphical indication of the planned route in a map view, providing a visual indication being indicative of the route guidance event, e.g., right turn, left turn, etc. The route guidance is not limited to these examples and the skilled person will appreciate various other techniques which enable to make the driver aware of the upcoming route guidance event.

By providing the route guidance in dependence of the number of required driving lane changes and the distance, it may be possible to provide the route guidance pre-emptively when it is actually required to guide the driver, i.e., in a more situation-specific manner.

Providing the route guidance for the at least one position may relate to: providing the route guidance when the current position is at the at least one position; and/or providing the route guidance as a graphical indication of the at least one position in a map view. In the latter case, the current position does not necessarily need to be at the at least one position, but it may be nonetheless.

The plurality of driving lanes is typically present on such roads corresponding to a higher hierarchy class, e.g., highways or arterial roads. Such roads may typically have two driving lanes, three driving lanes, or even more driving lanes. In typical scenarios, the driver of the vehicle is free in his choice of a particular one of the plurality of driving lanes, i.e., the driver may choose to drive on a driving lane being situated on the left-hand side or on the right-hand side or in the middle of the road.

The at least one position for which said establishing of the distance and said establishing of the number of required driving lane changes is performed may be predefined, e.g., with respect to a corresponding indication in a map database comprising map data, or may be determined based on various parameters, e.g., the current position of the vehicle, a predefined level of detail of the route guidance, a distance to the route guidance event, and/or a velocity of the vehicle, etc. In general, the at least one position does not necessarily need to be located on the same driving lane on which the current position of the vehicle is located.

It may be expendable to determine the current position such that it includes a current driving lane - for example, it is possible that the current position of the vehicle only refers to a position on the road segment, but not distinguish between different driving lanes. However, it is possible that the current position distinguishes between different driving lanes.

Providing the route guidance for the at least one position may, in other words, correspond to: providing the route guidance to the driver when the vehicle reaches the at least one position and/or providing the route guidance to the driver by means of a graphical indication for the at least one position in a map view, the graphical indication of the least one position enabling the driver to follow the route guidance event.

The number of required driving lane changes from the at least one position to the route guidance event may correspond to: the number of driving lane changes which the driver of the vehicle has to execute in order to follow the planned route at the route guidance event. For example, if the route guidance event corresponds to an exit of a highway, typically, this exit is located on a right-hand side of the highway. If the at least one position is located on the most left driving lane of the plurality of driving lanes of the highway, the number of required driving lane changes from the at least one position to the route guidance event may correspond to the number of driving lanes of the highway. In other words, in such an exemplary scenario the entire highway has to be crossed from the left-hand side to the right-hand side if the vehicle is at the least one position.

The distance between the at least one position and the route guidance event may correspond to the distance along the planned route, e.g., along the particular road segment along which the planned route is situated. The distance may alternatively or additionally correspond or consider a geometrical distance between the at least one position and the route guidance event. In particular, for curved roads the geometrical distance and the distance along the planned route may differ.

By providing the route guidance for the at least one position to the driver of the vehicle in dependence of the established distance and in dependence of the established number of required driving lane changes, it may be possible to provide the route guidance in a comparably selective and situation-aware manner. For example, if a large (small) number of driving lane changes is required and/or if the distance to the route guidance event is small (large), the route guidance for the at least one position may be provided to the driver in a more noticeable (less noticeable) manner or not at all. For example, providing the route guidance in a more noticeable manner may correspond to: providing the graphical indication of the planned route using bright colours, colours with an announcement effect, and/or colours with a warning effect. It may also correspond to issuing an audio command at a higher volume and/or issuing the audio command with a warning sound. It may also correspond to providing the visual indication of the route guidance event in a more prominent position, using effects promoting attention by the driver, e.g., flashing. Haptic feedback, e.g., vibration of the steering wheel, might be selectively used.

The above non-limiting examples of providing the route guidance for the at least one position to the driver may relate to a certain pertinence of the route guidance. However, alternatively or additionally, it is also possible that said providing of a route guidance includes selectively issuing a route guidance command to the driver of the vehicle when the vehicle is at the at least one position.

For example, if the established number of required driving lane changes is large (small) and / or if the established distance is small (large), the route guidance command may be selectively issued (not issued). In other words, if the route guidance is determined to be pertinent, the route guidance command may be selectively issued. In less critical situations, e.g., when there is a large distance between the at least one position and the route guidance event and/or if there is no or only a small number of driving lane changes required, it may be expendable to issue the route guidance command.

The method may further comprise, by means of a positioning unit, determining the current position of the vehicle such that the current position includes an indication of a particular driving lane on a current road segment on which the current position of the vehicle is located. The provided route guidance may further depend on the determined indication of the particular driving lane.

For example, the indication of the particular driving lane included in the current position indicates a different driving lane than the driving lane on which the at least one position is situated, it may be expendable to provide the route guidance for the at least one position or the route guidance for the at least one position may be provided less prominent.

For example, if the current position of the vehicle is situated on a driving lane which is associated with the route guidance event, e.g., in the case of a highway exit typically the most right driving lane, it may be desired to provide the route guidance for the at least one position being located on other driving lanes in a less prominent manner. For example, it may expendable to issue an audio route guidance command to the driver or use colours having an announcement effect for the road segment on which the at least one position is situated on.

It is also possible to provide the route guidance independent of the driving lane indicated by the current position.

The method may further comprise, e.g., by means of sensors of the vehicle, establishing a present traffic level for a vicinity of the vehicle. The provided route guidance may further depend on the established present traffic level. The traffic level may indicate at least one of the following: dense traffic, free-flowing traffic, congestion, etc.

Typically, if the traffic level in the vicinity of the vehicle corresponds to dense traffic or a traffic congestion situation, required driving lane changes may be more difficult to execute for the driver of the vehicle. In other words, a distance and time required to execute the established number of driving lane changes from the at least one position to the route guidance event may be larger for denser traffic than for roads with a low traffic load. By considering the present traffic level, the route guidance may be provided in a situation-aware manner to the driver of the vehicle, increasing the likelihood of successfully following the route guidance event. Unnecessarily providing pre-emptive route guidance which is not pertinent may be avoided. For example, preferably if there is dense traffic present in the vicinity of the vehicle, it may be possible to make the driver of the vehicle aware of the upcoming route guidance event earlier.

The method may further comprise, for the at least one position, determining a chance of successfully following the route guidance event. At a given established distance between the at least one position and the route guidance event, the chance of successfully following the route guidance event may be larger for fewer required driving lane changes. At a given established number of required driving lane changes, the chance of successfully following the route guidance event may be larger for larger distances between the at least one position and the route guidance event.

Said providing of the route guidance may depend on the determined chance of successfully following the route guidance event. For example, if the chance of successfully following the route guidance event is larger (smaller), the route guidance may be provided in a more prominent (less prominent) manner.

It is also possible that the method further includes executing a threshold comparison between the determined chance of successfully following the route guidance event, wherein said providing of the route guidance is selectively executed in dependence of the threshold comparison. For example, if the chance of successfully following the route guidance event falls below a predefined threshold for the at least one position, the route guidance may be executed. If, however, the chance of successfully following the route guidance event is above the predefined threshold, it may be expendable to execute the providing of the route guidance.

Said providing of the route guidance may further depend on elements selected from the group comprising: a traffic information message received via wireless receiver of the vehicle; a current speed limit retrieved from a map database; a current speed limit obtained from sensors of the vehicle; historic driver habits of a driver of the vehicle; and acceleration and/or deceleration capabilities of the vehicle.

For example, it may be possible to provide the route guidance in a more prominent manner if the received traffic information message indicates a traffic congestion for the vicinity of the vehicle and/or if the current speed limit retrieved from a map database indicates a high-speed area, e.g., without a speed limit, and/or if the current speed limit obtained from - e.g., optical - sensors of the vehicle indicates a high-speed area and/or if the historic driver habits of the driver of the vehicle indicate defensive driving attitude and/or if the acceleration capabilities of the vehicle indicate low acceleration power. In such scenarios it may be possible to provide the route guidance in a more prominent manner and/or at an earlier point in time and / or space with respect to the route guidance event.

Above, various influencing parameters for the providing the route guidance for the at least one position have been primarily discussed. In the following, various scenarios with respect to the manner in which the route guidance is provided will be primarily discussed.

It is possible that said providing of the route guidance includes providing in a map view a graphical indication for the at least one position. Optionally, the graphical indication may represent a chance of successfully following the route guidance event if the vehicle is at the at least one position.

In a simple scenario, the graphical indication may be a turning arrow displayed in the map view at the at least one position.

For example, the map view may correspond to a two-dimensional (2D) or three-dimensional (3D) graphical representation of a map of the vicinity of the current position. For example, the map view may be displayed on a display of a navigation system of the vehicle. In particular, the map view may include a graphical indication of the planned route. Different techniques to indicate a planned route are known to the skilled person, including, but not limited to: indicating the planned route by highlighting those road segments on which the planned route is situated. Additionally, techniques are known which allow the providing of a graphical indication for the route guidance event. For example, the graphical indication for the route guidance event can include displaying in the map view turning arrows at the respective position of the route guidance event e.g., pre-emptively even if the current position of the vehicle has not reached the route guidance event. For example, if the route guidance event corresponds to a right turn at an exit of a highway, the respective graphical indication can relate to a right turn arrow which is displayed at the corresponding position in the map view.

By providing in the map view the graphical indication for the at least one position, the graphical indication being representative of the chance of successfully following the route guidance, it may be possible to include a level of pertinence of the driver action necessary to follow the planned route in the graphical indication. By such techniques it may be possible for the driver to better assess the urgency of a driver action.

For example, on the road segment having a plurality of driving lanes it may be possible for the driver, based on the provided route guidance, to estimate when the driving lane change is required in order to eventually reach the route guidance event. In conventional scenarios, the driver of the vehicle may either be tempted to delay necessary driving lane changes as much as possible or the driver may be tempted to execute the driving lane changes as early as possible. Both scenarios may be dangerous: In the former scenario, there may be a high likelihood of not successfully following the planned route by missing the route guidance event - while in the latter case the driver may be tempted to immediately execute the route guidance without paying necessary attention to the traffic in the vicinity of the vehicle.

The graphical indication for the at least one position may include setting display parameters used for calculating a graphical representation of the driving lane of the road segment on which the at least one position is located. The display parameters may be selected from the group comprising: border width, colour, colour gradient, texture, filling pattern, animation, graphic or text labels, and transparency. For example, it may be possible to select a particular border width and/or colour for the graphical representation of the road segment on which the at least one position is located in dependence of the established distance and in dependence of the number of required driving lane changes from the at least one position to the route guidance event. This may enable the driver to assess the chance of successfully following the route guidance event, i.e., stay on the planned route, by optically perceiving the graphical representation for the at least one position. This may enable the driver to correctly judge the pertinence of a driver action with respect to the route guidance.

It is possible that the graphical indication for the at least one position includes colouring of the driving lane or the road segment on which the at least one position is located. In particular, the graphical indication may include providing a colour gradient between adjacent positions on the driving lane of the road segment on which the at least one position is located.

By such means, a particular easy perception of a need for a driver action, in particular for required driving lane changes, may be provided to the driver of the vehicle.

The colouring of the driving lane of the road segment may have an announcement effect being indicative of the chance of successfully following the route guidance event. For example, a red (green) colour may be used if the chance of successfully following the route guidance event for the at least one position is comparably low (high).

For example, the various techniques may be employed for a single at least one position or for two at least one positions. In latter case, the following technique may be applied.

The method may further comprise determining a first position between the current position of the vehicle and the route guidance event where the chance of successfully following the route guidance event equals a lower threshold. The method may further comprise determining a second position between the current position of the vehicle and the route guidance event where the chance of successfully following the route guidance event equals an upper threshold. The first and second positions may be located on the same driving lane. The graphical indication for the first position may include colouring of the driving lane of the road segment on which the first position is located at the first position in a first colour. The graphical indication for the second position may include colouring of the driving lane of the road segment on which the second position is located at second position in a second colour. The graphical indication for the first position and/or for the second position may include colouring of the driving lane of the road segment using a colour gradient, the colour gradient spanning from the first colour to the second colour and being applied in-between the first position and the second position.

In other words: it may be possible to select two positions on a certain driving lane having a comparably large and a comparably low chance of successfully following the route guidance event, i.e., of staying on the planned route. It may be possible to assign two colours of the colour spectrum to these two positions and provide a colour gradient in-between these two positions. By this, a differentiated graphical indication of the route guidance may be provided for the driver of the vehicle - while, at the same time, the computational efforts for providing the graphical representation may be comparably low. This may be because for the particular driving lane said establishing of the distance and said establishing of the number of required driving lane changes may only be required for the first and second positions.

Said establishing of the number of required driving lane changes may comprise retrieving, from a map-data database, an attribute of the road segment on which the at least one position is located, the attribute indicating a total number of driving lanes of the road segment. Typically, in the map-data database, attribute values may be provided for particular road segments which specify the number of driving lanes of the particular road segment. Based on this attribute value, it may be possible to establish the number of required driving lane changes for the at least one position. Alternatively or additionally, in various scenarios it is also possible to establish the number of driving lanes using vehicle sensors, e.g., optical cameras monitoring a surrounding of the vehicle.

Moreover, the method may comprise retrieving, from the map-data database, an attribute of the driving lane which is associated with the route guidance event. For example, this attribute may specify whether the route guidance is located on a left-hand side of the road segment or on a right-hand side of the road segment, i.e., is associated with the most left driving lane or is associated with the most right driving lane. Different degrees of details of the particular attribute values are possible. Alternatively or additionally, it is also possible to establish this attribute using sensor data, e.g., from the optical cameras of the vehicle, etc.

According to a further aspect, a navigation system for a vehicle is provided. The navigation system comprises at least one processor which is configured for performing the following steps: for at least one position which is located on a road segment along a planned route, the road segment having a plurality of driving lanes and being situated in-between a current position of the vehicle and a route guidance event: establishing a distance between the at least one position and the route guidance event and establishing a number of required driving lane changes from the at least one position to the route guidance event in order to follow the route guidance event. The navigation system may further comprise a user interface which is configured for, in dependence of said establishing of the distance and in dependence of said establishing of the number of required driving lane changes, providing route guidance to a driver of the vehicle to enable the driver to follow the route guidance event.

The navigation system may further be configured to execute the method of providing route guidance according to a further aspect of the present invention.

For such a navigation system, effects may be obtained which are comparable with the effects which may be obtained for the method of providing route guidance according to a further aspect of the invention.

In the following, the invention will be explained in further detail with respect to embodiments illustrated in the accompanying drawings. In these drawings:
FIG. 1 is a schematic illustration of a navigation system according to various embodiments of the present invention.
FIG. 2 illustrates map data for an intersection, where various road segments of the map data are associated with an attribute indicating a total number of driving lanes of the road segment.
FIG. 3 shows a map view of the map data of FIG. 2.
FIG. 4 shows a map view of the map data of FIG. 2, the map view further including a graphical representation of a planned route and route guidance, according to various reference implementations.
FIG. 5 is a map view for the map data of FIG. 2, further including a graphical indication of a chance of successfully following the route guidance event for various positions located on different driving lanes.
FIG. 6 is a map view for the map data of FIG. 2, further including a graphical indication of a chance of successfully following the route guidance event for various driving lanes.
FIG. 7 is a three-dimensional version of the map view of FIG. 5.
FIG. 8 is a flow chart of a method of providing route guidance for a planned route according to various embodiments of the present invention.
FIG. 9 is a flow chart of a method of providing route guidance according to various embodiments of the present invention.

In the following, various embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

Elements illustrated in the drawings are not necessarily shown to scale. Rather, the various elements are represented such that their function in general purpose becomes apparent to a person skilled in the art. Any connection or coupling between functional blocks, devices, components, or other physical or functional units shown in the drawings or described herein may also be implemented by an indirect connection or coupling. A coupling between components may also be established over wireless connection. Functional blocks may be implemented in hardware, firmware, software, or a combination thereof.

In the following, techniques of providing route guidance for a planned route are described. These techniques enable to provide the route guidance in a situation where ahead of a current position and in-between with respect to a route guidance event there are multiple driving lanes. In such a situation, the techniques according to various embodiments enable to provide the route guidance for the route guidance event in a situation-aware manner, differentiated for the various driving lanes, with a high level of detail, and selective with respect to an urgency of the route guidance. For example, if the route guidance event for which the route guidance is provided is further away or a larger number of driving lane changes are required, it may be possible to provide the route guidance such that it is more prominent and/or such that it is indicative of the chance of successfully following the route guidance event.

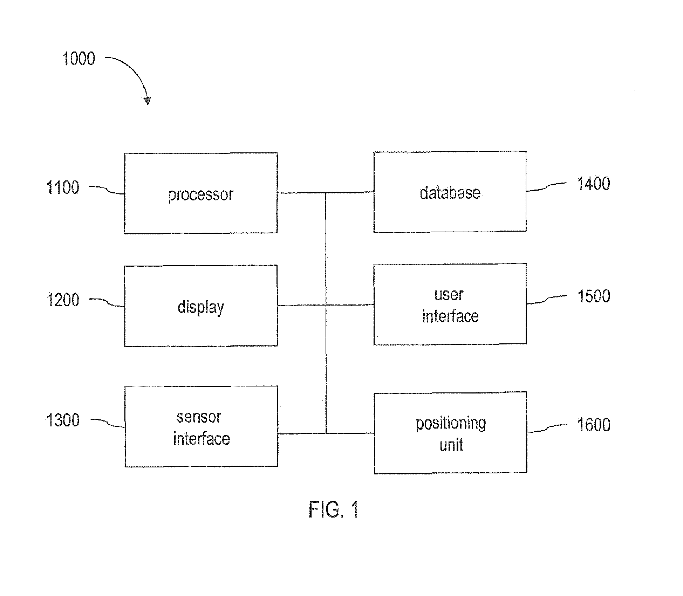

In FIG. 1, a navigation system 1000 is depicted. The navigation system comprises at least one processor 1100, e.g., a multi-core processor, which is configured to perform at least one task selected from the group comprising: pathfinding, route calculation, calculation of a graphical representation of map data in a map view, route guidance. The navigation system 1000 further comprises a display 1200 on which the map view is displayed.

Furthermore, the navigation system 1000 comprises a sensor interface 1300 which is configured to receive sensor data from various sensors of a vehicle in which the navigation system 1000 is mounted. For example, the sensors may be selected from the group comprising: optical sensors for detecting a current speed limit, sensors for detecting a present traffic level in the vicinity of the vehicle, wireless receiver for receiving traffic messages, sensors for providing current operation properties of the vehicle, such as acceleration and/or deceleration capabilities, sensor for monitoring an environment of the vehicle, e.g., to provide an indication of a current driving lane on which the vehicle is located. It is possible that the at least one processor 1100 makes use of such received sensor information in order to perform the various tasks.

Furthermore, the navigation system 1000 comprises a database 1400 which stores map data. This map-data database 1400 includes storage memory which stores a network of road segments, e.g., as a road network graph including vertices and nodes. Various of these road segments are associated with attributes which specify a number of driving lanes for each road segment.

The navigation system 1000 further comprises a user interface 1500. The user interface is configured to provide input from a user of the navigation system 1000 and to provide output to the user. For example, the user interface 1500 may include elements selected from the group comprising: buttons, keys, touch panel, voice recognition, gesture recognition.

Furthermore, the navigation system 1000 comprises a positioning unit 1600 which is configured to determine a current position of the vehicle. In particular, the positioning unit 1600 can be configured to determine the current position such that it includes an indication of a particular driving lane on a current road segment on which the current position of the vehicle is located. In other words, a spatial resolution of the determined current position may be high enough in order to determine the particular driving lane. For example, the positioning unit 1600 may include a global positioning unit and/or optical sensors which monitor the vicinity of the vehicle. It may be possible to analyze the image data obtained from these optical sensors in order to determine the particular driving lane on which the vehicle is located. Other techniques of determining the current driving lanes are known to the skilled person such that there is no need to discuss further details in this context.

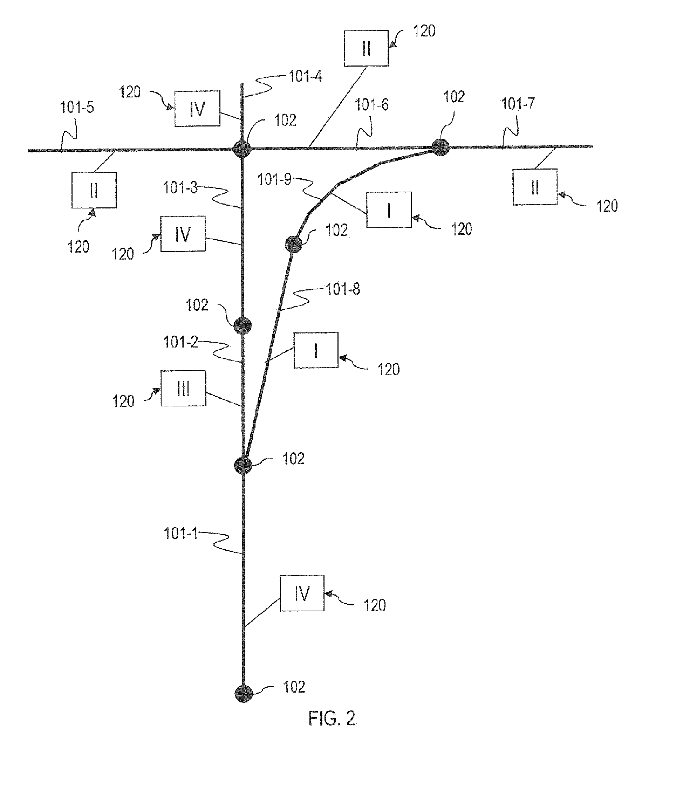

In FIG. 2, the map data stored in the map-data database 1400 is schematically illustrated. The map data comprise a network of road segments 101-1 - 101-7 which are interconnected by nodes 102. Sometimes, the road segments 101-1 - 101-7 are referred to as the vertices of the road network graph. In FIG. 2, it is furthermore illustrated that the various road segments 101-1 - 101-7 are associated with attributes 120 which indicate a total number of driving lanes of a respective road segment 101-1 - 101-7, e.g., in the example of FIG. 2 lying in the range one to four.

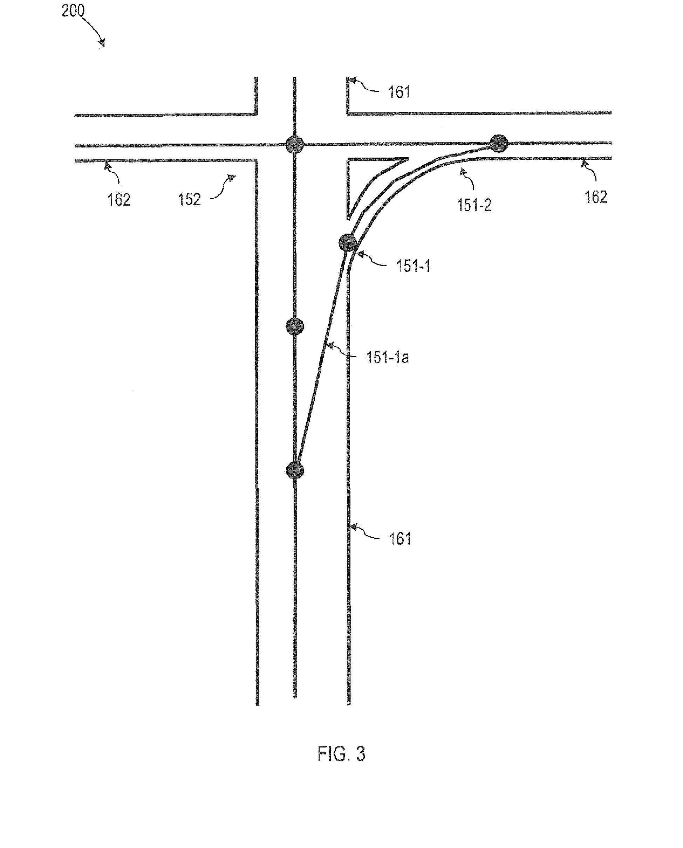

Turning to FIG. 3, a low detail map view 200 of the scenario of FIG. 2 is depicted. As can be seen from FIG. 3, the map data of FIG. 2 illustrates an intersection 152 of the first road 161 with a second road 162. A transition between the first road 161 and the second road 162 is provided. The transition comprises an exit 151-1 from the first road 161 and an entry 151-2 to the second road 162. Furthermore, an exit lane 151-1a is present.

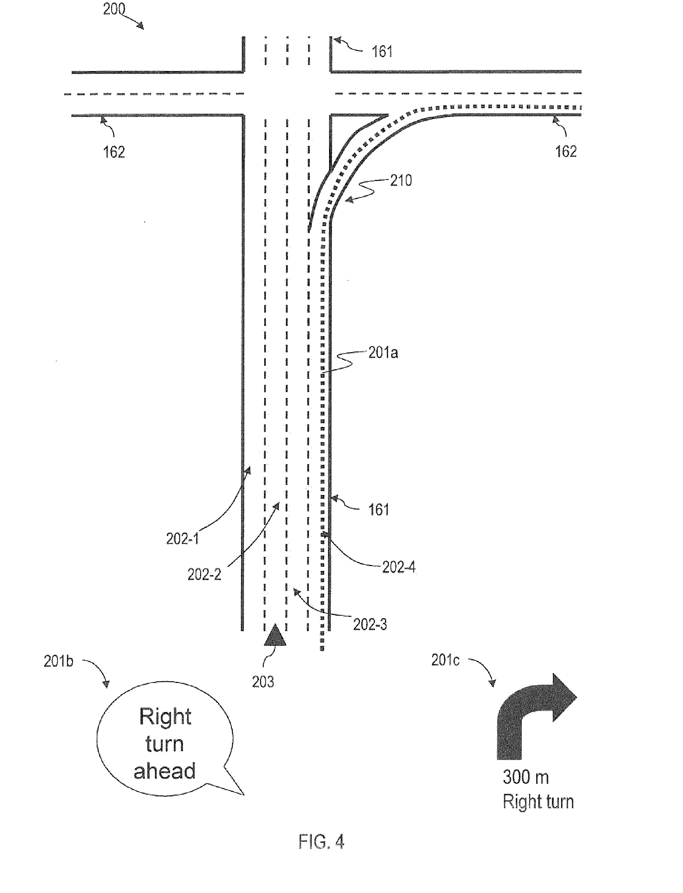

In FIG. 4, the map view 200 is depicted with greater detail. In particular, the four driving lanes 202-1, 202-2, 202-3, 202-4 of the first road 161 are depicted. Furthermore, a graphical representation of the current position 203 of the vehicle is illustrated. Furthermore, the map view 200 includes route guidance in the form of a graphical indication of the planned route 201a (illustrated with a dotted line in FIG. 4). As can be seen from a comparison of the FIGs. 3 and 4, the planned route follows the first road 161, leaves the first road 161 at the exit 151-1, enters the second road 162 at the entry 151-2 and then follows the second road 162. In particular, at the position of the exit 151-1, the driver of the vehicle has to take a turning action in order to stay on the planned route. Therefore, the exit 151-1 is a route guidance event 210.

As mentioned above, the graphical indication of planned route 201a, as such, provides the route guidance. Based on this graphical indication of the planned route 201a provided in the map view 200, the driver of the vehicle may be able to follow the route guidance event 210 and stay on the planned route. Other techniques of providing the route guidance would be issuing an audio command 201b that the route guidance event 210 is upcoming. Typically, the command 201b will be issued at a given distance between the current position 203 and the route guidance event 210. It is also possible to provide the route guidance in the form of a graphical visualization 201c of the route guidance event, in the scenario of FIG. 4 a right turn at the exit 151-1. Also such a graphical visualization 201c may be provided a certain distance ahead of the route guidance event 210.

By providing the route guidance in the form of the graphical indication of the planned route 201a and/or by issuing the audio command 201b and/or by providing the visual indication 201c, the driver of the vehicle can be made aware of the upcoming route guidance event 210. In the scenario of FIG. 4 this may lead to the following exemplary situation: The current position 203 is located on the third driving lane 202-2, while the route guidance event is situated at the first driving lane 202-4. Therefore, by providing the route guidance 201a, 201 b, 201c, the driver will be tempted to immediately react and execute the required driving lane changes, i.e., cross the driving lane 202-3, in order to reach the most right driving lane 202-4.

However, the route guidance does not include and is not based on a pertinence or urgency of the provided route guidance 201a, 201b, 201c. Therefore, the driver does not know whether it is in fact necessary to immediately change to the right driving lane 202-4 of the first road 161 - or whether it would be rather possible to delay the driver action and nonetheless successfully follow the route guidance event 210.

According to various embodiments, the route guidance 201a, 201b, 201c is provided for at least one position (not shown in FIG. 4) in-between the current position 203 and the route guidance event 210 and taking into account a distance between the at least one position and the route guidance event 210 as well as a number of required lane changes between the at least one position and the route guidance event 210. For example, it may be possible to selectively issue a route guidance command such as the audio command 201b and/or the visual indication 201c to the driver of the vehicle when the vehicle is at the at least one position. For example, with respect to the graphical indication of the planned route 201a: it is possible to colour, highlight or otherwise emphasize the planned route 201a when the current position 203 reaches the at least one position.

In such a scenario, providing the route guidance for the at least one position relates to: providing the route guidance when the current position is at the at least one position.

For example, it may be possible to determine a chance of successfully following the route guidance event 210 for the at least one position. Then, it may be possible to selectively issue the route guidance command 201b, 201c in a situation where the chance of successfully following the route guidance 210 falls below a predefined threshold, e.g., because the number of required driving lane changes is comparably high and/or because the established distance to the route guidance event 210 is comparably low. In such a situation it may be possible to provide the route guidance in situation-aware manner and thereby prompt the driving action of the driver when it is actually necessary to do so. In other words, route guidance in the form of audio commands and/or visual indications may be provided at certain positions, where driving lane changes become pertinent in order to successfully follow the route guidance event 210, or may be provided in a different manner for various positions.

Such techniques are motivated by the finding that typically a certain distance is necessary in order to complete a required driving lane change. This is because due to the traffic situation in the vicinity of the vehicle it may be necessary to wait for the availability of a neighbouring driving lane before the driving lane change can be actually executed. Therefore, based on the established distance and the established number of required driving lane changes, the chance of successfully following the route guidance event can be approximated. Said providing of the route guidance 201a, 201b, 201c may depend on further parameters. For example, said providing of the route guidance may further depend on a determined indication of the particular driving lane on which the current position of the vehicle is located. Furthermore, said providing of the route guidance may further depend on a present traffic level which can be established by means of sensors providing the data to the sensor interface 1300 (cf. FIG. 1).

For example, if in the embodiment of FIG. 4 the current location 203 of the vehicle has already been located on the most right driving lane 202-4, i.e., on the driving lane on which the route guidance event 210 is also located on, it may be expendable to provide the route guidance at all. For example, if the established present traffic level in the vicinity of the vehicle is comparably high, the distance which is necessary to execute the required driving lane change may increase. Therefore, it may be possible to provide the route guidance 201a, 201b, 201c taking the present traffic level into account. For example, if the present traffic level in the vicinity of the vehicle is dense, it may be desirable to provide the route guidance for a given position more prominently.

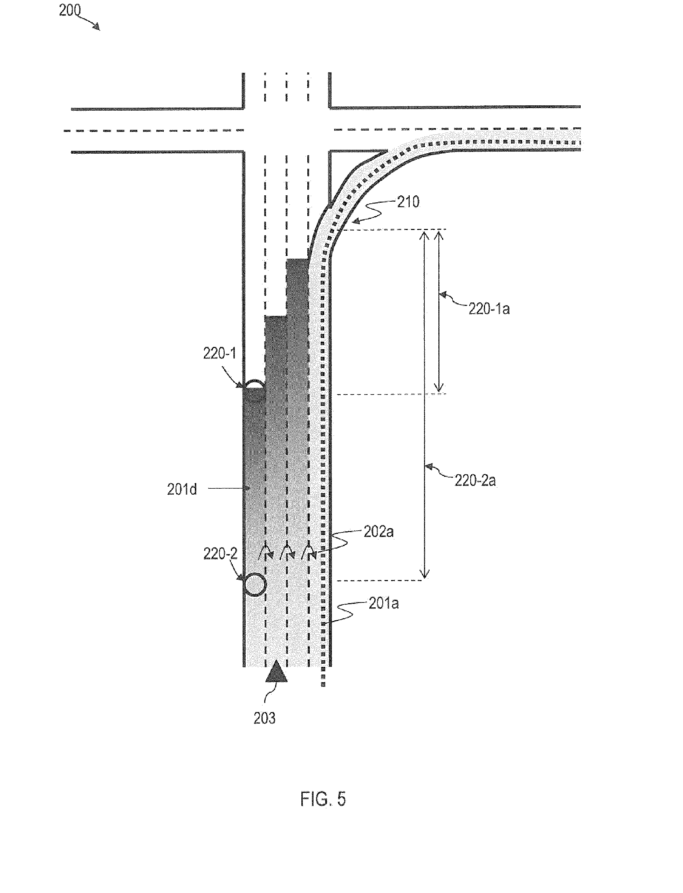

Turning to FIG. 5, the providing of the route guidance is discussed with respect to a first position 220-1 and a second position 220-2. Both, first and second positions 220-1, 220-2, are located on the most left driving lane 202-1. This means that the number of required driving lane changes 202a (indicated by the arrows in FIG. 5) from both positions 220-1, 220-2 to the route guidance event 210 amounts to three. Furthermore, both first and second positions 220-1, 220-2 lie in-between the current position 203 and the route guidance event 210. The distance 220-1a between the first position 220-1 and the route guidance event 210 is smaller than the distance 220-2a between the second position 220-2 and the route guidance event 210. The route guidance is provided in the map view 200 for both positions 220-1, 220-2 by means of a graphical indication for the at least one position.

In such a scenario, providing the route guidance for the at least one position 220-1, 220-2 relates to: providing the route guidance 201a by a graphical indication on the map view for the at least one position. The current position 203 does not need to be at the at least one position 220-1, 220-2. The graphical indication uses a grey-scale in order to represent a chance of successfully following the route guidance 210, i.e., successfully executing the right turn at the exit 151-1. In-between the first and second positions 220-1, 220-2 the graphical indication 201d of the route guidance includes colouring of the driving lane 202-1 using a colour gradient, the colour gradient spanning from the first colour of the first position 220-1 to the second colour of the second position 220-2.

It is possible that the first position 220-1 is determined as the particular position where the chance of successfully following the route guidance event 210 equals the lower threshold, i.e., where it is particularly unlikely to successfully execute the right turn at the exit 151-1. Likewise, the second position 220-2 can be determined as the particular position where the chance of successfully following the route guidance event equals an upper threshold.

As can be seen from FIG. 5, the route guidance is provided separately for the driving lanes 202-1, 202-2, 202-3, 202-4. This is because the number of required driving lane changes 202a between the various positions on the various driving lanes 202-1, 202-2, 202-3, 202-4 differs. For each driving lane, different at least one positions may be employed.

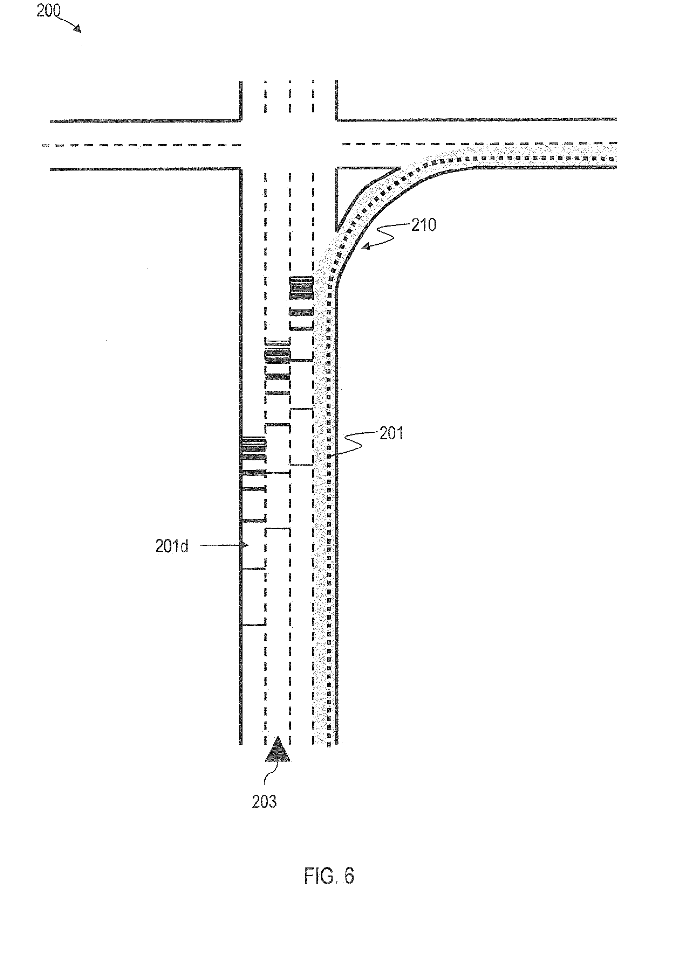

In FIG. 6, a further embodiment of the route guidance in the form of the graphical indication 201d is provided. In this scenario it is expendable to use colour gradients. Rather, a plurality of lines arranged on the driving lanes 202-1, 202-2, 202-3, 202-4 is used where the neighbouring lines have decreasing distance. The distance between the neighbouring lines is proportional to the chance of successfully following the route guidance event 210.

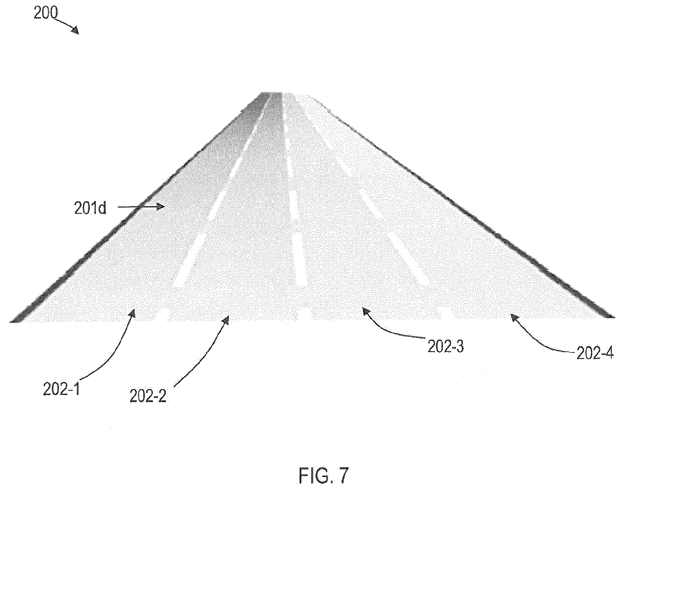

In FIG. 7, the scenario of FIG. 5 is illustrated in the form of a 3D map view 200. As can be seen, similar techniques may be readily applied in the case of the 3D map view 200.

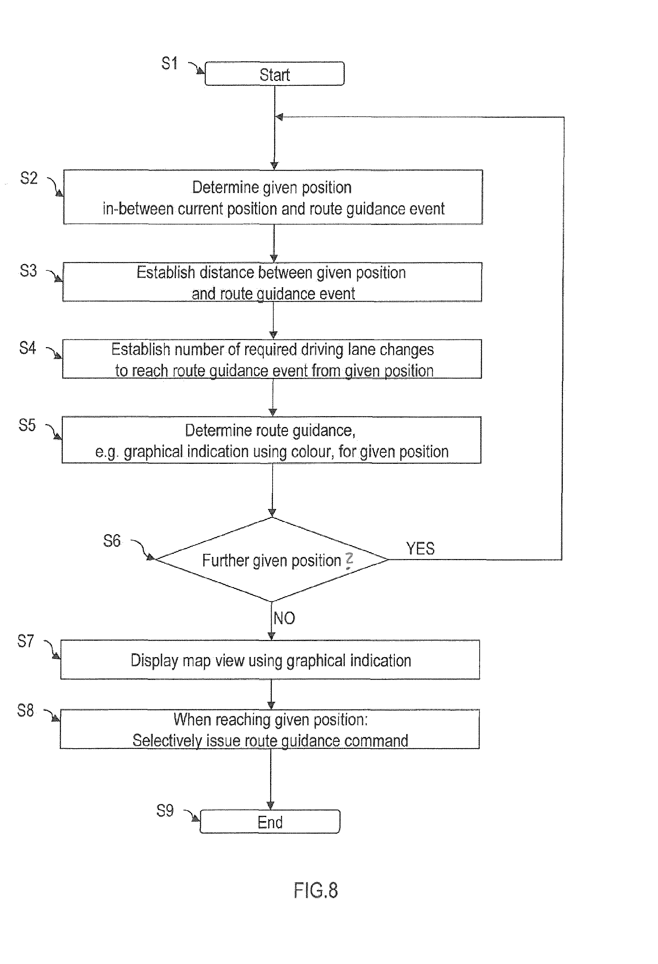

In FIG. 8, a flowchart of a method of providing route guidance according to various embodiments of the present invention is depicted. The method starts in step S1. In step S2 a given position is determined, which is in-between the current position 203 and the route guidance event 210. For example, the given position can be predetermined or can be determined based on a threshold comparison as described above or can be determined by other techniques, e.g., including rastering the road in-between the current location and the route guidance event and selecting a particular raster point.

In step S3, the distance between the given position and the route guidance event is established. In step S4, the number of required driving lane changes to reach the route guidance event 210 from the giving position is established.

In step S5, the type of route guidance is determined. In particular, providing the route guidance can include providing a graphical indication in the map view, using a certain colour for the given position.

In step S6 it is checked whether further given positions are present. For example, if further given positions are present, the steps S2-S5 are executed for these further given positions.

If this is not the case, in step S7 the map view 200 is displayed using the graphical indication of the determined route guidance of step S5. This may be possible even when the current position is ahead of the at least one given position of step S2.

If the determined route guidance in step S5 includes issuing a route guidance command when reaching the given position, in step S8 this route guidance command is issued. However, it should be understood that step S8 is an optional step.

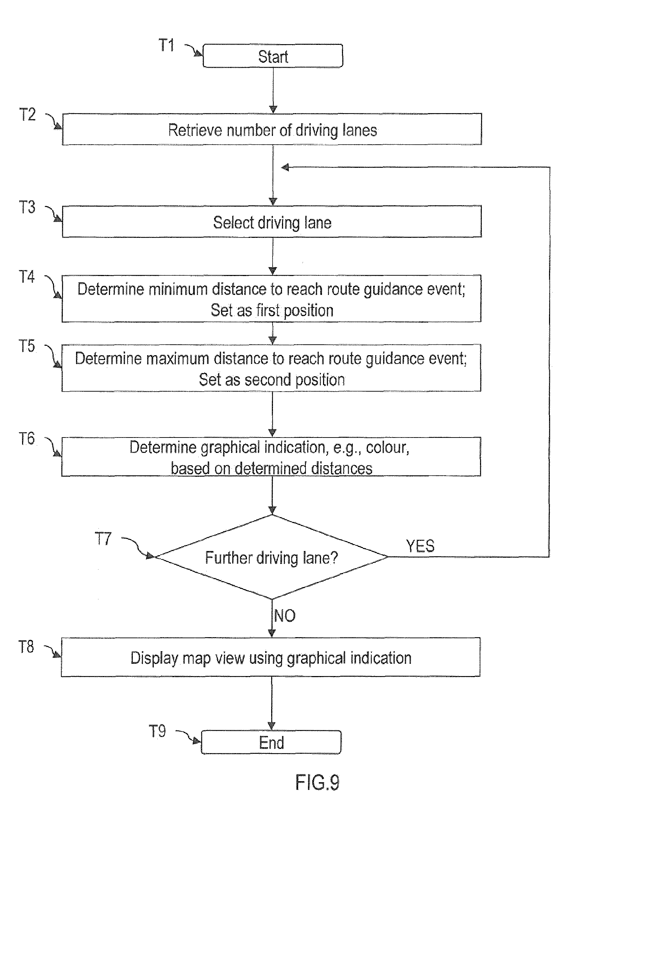

In FIG. 9, an alternative scenario for which the method of providing route guidance according to various embodiments of the present invention may be applied is illustrated using a flowchart. The method starts in step T1. In step T1, the number of driving lanes is retrieved for a road segment in-between the current location and the route guidance event. In step T3, a particular driving lane of the road segment is selected. In step T4, a minimum distance to reach the route guidance event 210 from the selected driving lane is determined. This may occur based on an established number of required driving lane changes from the selected driving lane to the route guidance event 210. The particular position which corresponds to the minimum distance is set as the first position.

Likewise, in step T5, a second position is determined which corresponds to the maximum distance to reach the route guidance event 210. For example, steps T4 and T5 can include a threshold comparison.

In step T6, a graphical indication is determined for the first and second position and optionally for intermediate positions lying in-between the first and second positions. The graphical indication can include the providing of colours and/or colour gradients.

In step T7, it is checked whether further driving lanes exist. If this is the case, steps T3-T6 are executed anew for the further driving lanes.

Otherwise, in step T8, the map view 200 is displayed using the graphical indication as determined in step T6.

The method ends in step T9.

Although the invention has been shown and described with respect to certain preferred embodiments, equivalents and modifications will occur to others skilled in the art upon reading and understanding the specification. The present invention includes all such equivalents and modifications and is limited only by the scope of the appended claims.

## Claims

1. A method of providing route guidance (201a, 201 b, 201c, 201d) for a planned route (201a) comprising a route guidance event (210) ahead of a current position (203) of a vehicle,
wherein the method comprises:
- for at least one position (220-1, 220-2) which is located on a road segment (101-1 - 101-7) along the planned route (201a), the road segment (101-1 - 101-7) having a plurality of driving lanes (202-1 - 202-4) and being situated in-between the current position (203) and the route guidance event (210):
- establishing a distance (220-1a, 220-2a) between the at least one position (220-1, 220-2) and the route guidance event (210),
- establishing a number of required driving lane changes (202a) from the at least one position (220-1, 220-2) to the route guidance event (210) in order to follow the route guidance event (210),
- in dependence of said establishing of the distance (220-1a, 220-2a) and in dependence of said establishing of the number of required driving lane changes (202a), providing the route guidance (201a, 201b, 201c, 201d) for the at least one position (220-1, 220-2) to a driver of the vehicle to enable the driver to follow the route guidance event (210).

2. The method according to claim 1,
wherein the method further comprises:
- by means of a positioning unit (1600) determining the current position (203) of the vehicle such that the current position (203) includes an indication of a particular driving lane on a current road segment (101-1 - 101-7) on which the current position (203) of the vehicle is located,
wherein the provided route guidance (201a, 201 b, 201c, 201d) further depends on the determined indication of the particular driving lane.

3. The method according to any one of the claims 1 or 2,
wherein the method further comprises:
- establishing a present traffic level for a vicinity of the vehicle,
wherein the provided route guidance (201a, 201 b, 201c, 201d) further depends on the established present traffic level.

4. The method according any one of the preceding claims,
wherein the method further comprises:
- for the at least one position (220-1, 220-2) determining a chance of successfully following the route guidance event (210).

5. The method according to any one of the preceding claims,
wherein said providing of the route guidance (201a, 201 b, 201c, 201d) further depends on elements selected from the group comprising:
- a traffic information message received via a wireless receiver of the vehicle;
- a current speed limit retrieved from a map database;
- a current speed limit obtained from sensors of the vehicle;
- historic driver habits of a driver of the vehicle; and
- acceleration and / or deceleration capabilities of the vehicle.

6. The method according to any one of the preceding claims,
wherein said providing of the route guidance (201a, 201 b, 201c, 201d) includes providing in a map view a graphical indication for the at least one position (220-1, 220-2),
wherein, optionally, the graphical indication represents a chance of successfully following the route guidance event (210) if the vehicle is at the at least one position (220-1, 220-2).

7. The method according to claim 6,
wherein the graphical indication for the at least one position (220-1, 220-2) includes setting display parameters used for calculating a graphical representation of the driving lane of the road segment (101-1 - 101-7) on which the at least one position (220-1, 220-2) is located,
wherein the display parameters are selected from the group comprising:
- border width;
- colour;
- colour gradient;
- texture;
- filling pattern;
- animation;
- graphic-labels and/or text-labels; and
- transparency.

8. The method according to any one of the claims 6 or 7,
wherein the graphical indication for the at least one position (220-1, 220-2) includes colouring of the driving lane of the road segment (101-1 - 101-7) on which the at least one position (220-1, 220-2) is located.

9. The method according to claim 8,
wherein the graphical indication includes providing a colour gradient between adjacent positions on the driving lane of the road segment (101-1 - 101-7) on which the at least one position (220-1, 220-2) is located.

10. The method according to any one of the claims 8 or 9,
wherein the colouring of the driving lane of the road segment (101-1 - 101-7) has an announcement effect being indicative of the chance of successfully following the route guidance event (210).

11. The method according to any one of the claims 6 - 10,
wherein the method further comprises:
- determining a first position between the current position (203) of the vehicle and the route guidance event (210) where the chance of successfully following the route guidance event (210) equals a lower threshold,
- determining a second position between the current position (203) of the vehicle and the route guidance event (210) where the chance of successfully following the route guidance event (210) equals an upper threshold,
wherein the first position and the second position are located on the same driving lane,
wherein the graphical indication for the first position includes colouring of the driving lane of the road segment (101-1 - 101-7) on which the first position is located at the first position in a first colour,
wherein the graphical indication for the second position includes colouring of the driving lane of the road segment (101-1 - 101-7) on which the second position is located at the second position in a second colour,
wherein the graphical indication for the first position and / or the second position includes colouring of the driving lane of the road segment (101-1 - 101-7) using a colour gradient, the colour gradient spanning from the first colour to the second colour and being applied in-between the first position and the second position.

12. The method according to any one of the preceding claims,
wherein establishing the number of required driving lane changes (202a) comprises:
- retrieving, from a map-data database, an attribute of the road segment (101-1 - 101-7) on which the at least one position (220-1, 220-2) is located, the attribute indicating a total number of driving lanes (202-1 - 202-4) of the road segment (101-1 - 101-7).

13. The method according to any one of the preceding claims,
wherein providing the route guidance (201a, 201b, 201c, 201d) includes:
- selectively issuing a route guidance command (201b, 201c) to the driver of the vehicle when the vehicle is at the at least one position (220-1, 220-2).

14. Navigation system (1000) of a vehicle, comprising:
- at least one processor (1100) configured for performing the following steps:
- for at least one position (220-1, 220-2) which is located on a road segment (101-1 - 101-7) along a planned route (201a), the road segment (101-1 - 101-7) having a plurality of driving lanes (202-1 - 202-4) and being situated in-between a current position (203) of the vehicle and a route guidance event (210):
- establishing a distance (220-1a, 220-2a) between the at least one position (220-1, 220-2) and the route guidance event (210),
- establishing a number of required driving lane changes (202a) from the at least one position (220-1, 220-2) to the route guidance event (210) in order to follow the route guidance event (210),
- a user interface (1500) configured for, in dependence of said establishing of the distance (220-1a, 220-2a) and in dependence of said establishing of the number of required driving lane changes (202a), providing route guidance (201a, 201b, 201c, 201d) for the at least one position (220-1, 220-2) to a driver of the vehicle to enable the driver to follow the route guidance event (210).

15. The navigation system (1000) according to claim 14,
wherein the navigation system (1000) is further configured to execute the method according to any one of the claims 1 - 13.
